# EUROPÄISCHE PATENTSCHRIFT

(11) **EP 1 379 154 B1**
(45) Veröffentlichungstag und Bekanntmachung des Hinweises auf die Patenterteilung: **07.09.2005**
(21) Anmeldenummer: 02735167.5
(22) Anmeldetag: 20.03.2002
(51) Int. Cl.: A47J 31/40

(54) **ESPRESSOBRÜHEINRICHTUNG**
ESPRESSO BREWING DEVICE
DISPOSITIF DE PREPARATION D'EXPRESSO

(30) Priorität: 31.03.2001 DE 20105672 U
(43) Veröffentlichungstag der Anmeldung: 14.01.2004
(73) Patentinhaber: NESTEC S.A., 1800 Vevey (CH)
(72) Erfinder: FISCHER, Daniel, CH-8590 Romanshorn (CH)
(74) Vertreter: Schubert, Siegmar
(86) Internationale Anmeldenummer: PCT/EP2002/003281
(87) Internationale Veröffentlichungsnummer: WO 2002/078499

(56) Entgegenhaltungen:
- EP-A- 1 002 490
- DE-U- 20 015 903
- FR-A- 1 564 088
- US-A- 4 724 752

## Beschreibung

Die Erfindung betrifft eine Espressobrüheinrichtung nach dem Oberbegriff des Anspruchs 1.

Eine derartige bekannte Espressobrüheinrichtung umfaßt eine Brüheinheit, ein - auch elektromotorisch - drehbares Magazin mit einem Magazinteller, auf dem mehrere als Kartuschen bezeichnete Magazinröhren zur Aufnahme von Portionskapseln bzw. Kaffeeportionen annähernd in Umfangsrichtung des Magazintellers angeordnet sind (EP 1 460 366 A1). Um die Portionskapseln einzeln in die Brüheinheit abgeben zu können, ist ein verhältnismäßig komplizierter, mit einem Elektromagneten gekoppelter Hebelmechanismus vorgesehen. Dieser Hebelmechanismus wirkt auf schwenkbar angeordnete Klinken ein, die beiderseits mit je einer Auflagefläche zum Abstützen einer Kaffeeportion versehen sind. Die Klinken erfassen einen abstehenden Rand der Kaffeeportionen, die mit ihrem Rand und damit ihrem Boden nach oben ausgerichtet in den Magazinröhren gestapelt sind. Durch Betätigung des Hebelmechanismus kann jeweils die unterste Portionskapsel von den Klinken gelöst in einen unter sie geschwenkten Teil der Brühkammer, welche Bestandteil der Brüheinheit ist, fallen, Zum Aufbrühen des Kaffees muß dieser untere Teil der Brühkammer zu einem oberen Teil der Brühkammer, die auf ihrer Oberseite einen Verschlußkolben mit pyramidenförmigen Erhebungen und Durchtrittsöffnungen aufweist, geschwenkt werden. Anschließend wird ein Stößel von der Unterseite des unteren Teils der Brühkammer hochgefahren, der in die Portionskapsel eindringt, um die Kaffeeportion mit Brühwasser zu beaufschlagen. Nach Durchbrechen des oben angeordneten Bodens der Portionskapsel durch die pyramidenförmigen Erhebungen kann der aufgebrühte Kaffee bzw. Espresso durch die oberen Öffnungen in dem Verschlußkolben ausströmen. Danach wird die Brühkammer wieder in ihre Ausgangsstellung bewegt und die ausgelaugte Portionskapsel wird mit dem weiter hochfahrenden Stößel aus der Brühkammer ausgeworfen. Der Schwenk- und Betätigungsmechanismus der Brühkammer und des hierin beweglichen Stößels sind verhältnismäßig kompliziert. Wie die ausgelaugte Portionskapsel vollständig ausgeworfen werden soll ist unklar, da sich in der Ausgangsstellung der Brühkammer über ihr eine Magazinröhre befindet. - Ein zwischen dem Magazin und der Brüheinheit angeordnetes Schubladenelement soll dazu dienen, eine einzelne, nicht magazinierte Portionskapsel der Brüheinheit zuzuführen. Durch dieses Schubladenelement wird die Bauhöhe der gesamten Einrichtung vergrößert und die Einrichtung komplizierter. - Zur Auswahl einer Kaffeesorte bzw. einer Portionskapsel, welche die Kaffeesorte beinhaltet, weist jede Magazinröhre ein Sichtfenster auf, welches dem Benutzer erlaubt, zu erkennen, welche Kaffeesorte in der entsprechenden Magazinröhre aufgenommen ist. Dadurch soll auch erkannt werden, welche Kaffeesorte sich gerade über der Brüheinheit befindet und als nächstes zum Aufbrühen eines Kaffeegetränks verwendet wird. Zur Erkennung der jeweiligen Kaffeesorte wird beispielsweise eine Farbkennung vorgeschlagen. Denkbar sei es aber auch, die einzelnen Portionskapseln mit einem Code zu versehen, der mit einem entsprechenden Lesegerät elektronisch erfaßt werden kann, um die Portionskapseln und insbesondere deren Inhalt zu erkennen. Diese Erkennung soll beispielsweise dazu genutzt werden, auf einem Display anzuzeigen, welche Kaffeesorte zum Aufbrühen des nächsten Kaffeegetränks verwendet wird. Als weitere Variante ist ein Bedienpaneel vorgesehen, über welches eine Kaffeesorte ausgewählt werden kann, um den Magazinteller elektromotorisch so weit zu verdrehen, bis sich die entsprechende Magazinröhre in der Wirkstellung über der Brüheinheit befindet. Die dazu notwendigen Mittel sind nicht dargestellt. Schwierig, wenn nicht unmöglich, erscheint die Erkennung eines Code auf dem Umfang einer Portionskapsel, der durch das Sichtfenster abgetastet werden könnte, während beispielsweise eine Erkennung eines Code auf dem Boden der Portionskapsel nicht in Frage kommen kann, da dieser Boden durch die darüber gestapelte Portionskapsel abgedeckt ist.

Zum Stand der Technik gehört weiterhin eine Maschine zur Abgabe von Getränken, wie Kaffee, Tee, mit einem Magazinteller, der eine Reihe von längs seines Umfangs angeordneten Magazinröhren trägt, welche Portionskapseln aufnehmen (EP 1 002 490 A1). Der Magazinteller ist durch eine Antriebseinrichtung, auch Malteserantriebseinrichtung, so drehbar, daß eine Magazinröhre mit den gewünschten Portionskapseln neben eine Wasser-/Dampfabgabeeinrichtung einstellbar ist. In dieser Position kann die unterste der mit ihrem Rand nach unten orientiert gestapelten Porfionskapseln durch eine Schubeinrichtung in die Position unter der Wasser-/Dampfabgabeeinrichtung geschoben werden. Die dazu verwendete Schubeinrichtung liegt vollständig innerhalb der Magazinröhrenanordnung zentral über dem Magazinteller. Diese Maschine ist zwar nicht sehr hoch, jedoch muß die Wasser-/Dampfabgabeeinrichtung wegen der Anordnung der Schubeinrichtung nahe neben der Magazinröhrenanordnung liegen.

Zum horizontalen Transport von Portionskapseln, die von einem Magazin mit linear nebeneinander angeordneten Magazinkammern ausgewählt und in eine im Abstand neben dem Magazin angeordneten Brüheinheit transportiert werden sollen, ist auch die Verwendung eines Transportbandes bekannt, welches im wesentlichen unterhalb der Magazinkammern angeordnet ist und mit einer Übergabestation zur horizontalen Übergabe einer ausgewählten Portionskapsel von dem Transportband zu der Brüheinheit ausgestattet ist (US-A 3 812 273). - Die lineare Anordnung der Magazinkammern erfordert aber eine entsprechend große Ausdehnung der gesamten Einrichtung in ihrer Breite. Außerdem sind der Transport und die Übergabe einer der ausgewählten Portionskapsel von dem Magazin zu der Brüheinheit technisch verhältnismäßig aufwendig.

Bei einer anderen Einrichtung zur Zubereitung von Getränken ist unterhalb von röhrenförmigen Magazinabteilungen, in denen Portionskapseln mit dem Boden nach unten gestapelt sind, eine drehbare Trommel mit einer Aufnahmeöffnung für eine ausgewählte der Portionskapseln angeordnet (FR-A 1 564 088). Mit der Trommel wird die ausgewählte Portionskapsel zu einer Öffnung in einer ortsfesten Platine transportiert, durch die die Portionskapsel auf eine weitere Transporteinrichtung zum horizontalen Transport bis zu einer Getränkeaufbereitungseinheit transportiert wird, über der die Portionskapsel zusätzlich gekippt wird. - Diese Einrichtung ist kompliziert, weil eine ausgewählte Portionskapsel nicht nur horizontal transportiert werden muß, sondern auch zum abschnittsweise kontrollierten Fall freigegeben werden muß und schließlich noch aus ihrer magazinierten Lage mit dem Boden nach unten in die umgekehrte Lage mit ihrem Boden nach oben über der Getränkezubereitungseinheit gekippt werden muß.

Hinsichtlich der Kodierung der Portionskapsel und der Steuerung der Espressobrüheinrichtung gehören bereits Portionskapsein bzw. Patronen zur Zubereitung von verschäumten Getränken zum Stand der Technik, die mit wenigstens einem Code bzw. Erkennungsmittel versehen sind, durch welche die Patrone bei Verwendung in der Einrichtung identifiziert wird und die Patrone bzw. deren Inhalt den richtigen Behandlungsschritten unterzogen wird, einschließlich der Einführung eines wäßrigen Mediums in die Patrone (DE 694 00 787 T2). Das Erkennungsmittel kann einen Strichcode umfassen, der auf den Körper der Patrone aufgedruckt ist und durch eine optische Vorrichtung abgetastet werden kann. Das Erkennungsmittel kann aber auch einen oder mehrere Streifen eines magnetischen Materials umfassen, die mit einem magnetischen Sensor gelesen werden können. Die Einrichtung zur Getränkezubereitung ist vorzugsweise so ausgeführt, daß die Patrone nach ihrem Einsatz in die Einrichtung automatisch gehandhabt wird.

Generell geht die Verwendung von Portionskapseln mit Kennungen und deren Identifizierung, um die Portionskapsel und deren Inhalt richtig zu behandeln, insbesondere mit flüssigem Medium zu beaufschlagen, generell auch aus der EP 0 455 337 B1 hervor.

In einer weiterhin bekannten Vorrichtung zur Zubereitung eines Getränks unter Verwendung einer Packung bzw. Portionskapsel sind unterschiedliche Portionskapseln in verschiedenen ortsfesten Kanälen geordnet untergebracht, die durch jeweils einen zugeordneten Betätigungsknopf zur Entnahme einer Portionskapsel geöffnet werden können (EP 0 334 573 B1). Die manuell entnommene Portionskapsel wird in eine Öffnung unter einer Brühstation eingesetzt, und zwar so, daß durch die Portionskapsel ein Mikroschalter betätigt wird, der den Brühvorgang freigibt. Der Mikroschalter dient also zur Erkennung der richtigen Position der Portionskapsel vor deren Beaufschlagung mit dem wäßrigen Medium.

Der vorliegenden Erfindung liegt die Aufgabe zugrunde, eine Espressobrüheinrichtung der eingangs genannten Gattung zunächst von der Steuerung abgesehen so weiterzubilden, daß bei geringer Bauhöhe die Zugänglichkeit funktionell wichtiger Teile, insbesondere des Magazins zum geordneten Einfüllen von Portionskapseln, verbessert wird, wenngleich diese Teile der Espressobrüheinrichtung in einem Gehäuse geschützt untergebracht werden sollen.

Die der Erfindung zugrundeliegende Aufgabenstellung wird grundliegend gemäß dem kennzeichnenden Teil des Anspruchs 1 gelöst.

Die von dem Trägerchassis der Espressobrüheinrichtung herausziehbare Magazintellerschublade trägt den Magazinteller mit den auf ihm angebrachten Magazinröhren sowie mit einem unten herausragenden Drehzapfen zur Lagerung in der Magazinschublade. Zur Steuerung seines Antriebs kann der Magazinteller seitlich eine Nullstellungsreferenzmarke aufweisen, zu deren Abtastung ein Abtastkontakt bzw. Sensor auf der Magazintellerschublade ortsfest angeordnet sein kann. - Die Magazintellerschublade hat den Vorteil, daß die Magazinröhren bequem von oben mit Portionskapseln jeweils einer Kaffeesorte gefüllt werden können, wonach die Magazinschublade wieder in die Einrichtung eingeschoben werden kann, in der die Magazintellerschublade mit den an ihr angebrachten Elementen, insbesondere den Magazinröhren mit Portionskapseln, geschützt und im Bedarfsfall verschließbar untergebracht sind. Außerdem wird durch die herausziehbare Magazinschublade die Wartung vereinfacht.

Besonders vorteilhaft ist es in diesem Zusammenhang, wenn der Magazinteller mit den Magazinröhren von der Magazintellerschublade einfach getrennt werden kann. In diesem Fall können auch mehrere verhältnismäßig wenig aufwendige Magazinteller mit Magazinröhren mit Portionskapsein bestückt bereit gehalten werden, um im Bedarfsfall rasch ausgetauscht zu werden.

Wenn verschiedene Kaffeesorten zur Auswahl bereitgehalten werden, sind diese zur Wiedererkennung jeweils in verschiedene Magazinröhren geordnet zu laden. Im Hinblick auf die weiteren Merkmale der Einrichtung, insbesondere das Abtasten bzw. Lesen von Kodierungen an den Magazinkapseln mit mindestens einem Sensor bzw. Abtaster, werden die Portionskapseln mit ihrem Boden, d.h. Bodenmembran, nach unten in die Magazinröhren eingelegt. Die zu der Espressobrüheinrichtung gehörende Brüheinheit ist, wie unten charakterisiert, weiter so ausgebildet, daß eine derart orientierte Portionskapsel nach lediglich horizontalem Transport ohne Wendung dem Brühvorgang unterworfen werden kann.

Die Magazinröhren weisen vorteilhaft gemäß Anspruch 3 in einem sich über dem Magazinteller erhebenden, unteren Mantelabschnitt je eine Kapselmagazinöffnung auf, die bezüglich des Magazintellers radial nach außen offen ist. Dabei erstreckt sich zwischen dem Magazinteller und der Brüheinheit eine Kapselgleitbahn, auf der jeweils eine Portionskapsel durch einen elektromotorisch angetriebenen Kapselmitnehmer aus einer in Entnahmestellung positionierten Magazinröhre zu der Brüheinheit verschiebbar ist. In Entnahmestellung der ausgewählten Magazinröhre ist diese also durch den Magazinteller so gedreht, daß eine unterste der mit dem Boden nach unten gestapelten Portionskapseln mittels des Kapselmitnehmers durch die Kapselmagazinöffnung der Magazinröhre hindurch und weiter über die Kapselgleitbahn zu der Brüheinheit geschoben werden kann.

Zur Führung des Kapselmitnehmers auch im Bereich innerhalb des Magazintellers bei dem Ausschieben jeweils einer Portionskapsel ist gemäß Anspruch 4 unter jeder Magazinröhre ein radial verlaufender, sich bis zum Außenrand des Magazintellers erstreckender und dort offener Kapselausschubschlitz ausgeformt, der in Entnahmestellung einer der Magazinröhren in eine Kapselmitnahmeführung übergeht, die aus der Kapselgleitbahn ausgeformt ist und sich in dieser bis zur Brüheinheit erstreckt.
Zur Führung der Portionskapseln auf der Kapselgleitbahn ist diese mit zusätzlichen Mitteln in Form von Kapselführungen im wesentlichen parallel zu der Kapselmitnahmeführung versehen, wobei der Abstand zwischen den beiden Kapselführungen etwas größer als der Durchmesser der Portionskapsel in deren Bodenbereich bzw. an der Bodenmembran ist.

Der Kapselmitnehmer ist Bestandteil der Kapseltransporteinrichtung, und zwar steht der Kapselmitnehmer zu seiner Betätigung gemäß Anspruch 5 über einen Antriebshebel und Getriebeelemente mit einem Kapseltransportantriebsmotor in Verbindung. Die Getriebeelemente können dabei insbesondere ein Untersetzungsgetriebe an dem Kapseltransportantriebsmotor, eine antriebsseitig mit dem Untersetzungsgetriebe verbundene Antriebsscheibe mit Antriebszapfen sein, der in einen Antriebszapfenschlitz in den Antriebshebel in der Nähe dessen einen Endes gleitend eingreift. Der außerhalb diesen Endes um einen Mitnehmerzapfen gelagerte Antriebshebel weist an dem zu dem Antriebszapfenschlitz entfernten Ende einen Kapselmitnehmerschlitz auf, in dem die Kapselmitnahmeführung ebenfalls gleitbeweglich gelagert ist. Die Getriebeanordnung überträgt insgesamt die Drehbewegung des Kapseltransportantriebsmotors in eine linear geführte Bewegung des Kapselmitnehmers.

Bei einer niedrigen, kompakten Anordnung des Magazins im wesentlichen neben der Brüheinheit ist die Kapseltransporteinrichtung so ausgebildet, daß sie die Portionskapseln nur horizontal mit deren Boden nach unten transportiert. Sie ist dabei im wesentlichen zwischen dem Magazin und der Brüheinheit angeordnet.

Zum Antrieb des Magazintellers bzw. um eine ausgewählte der Magazinröhren in Entnahmestellung zu drehen, steht der Magazinteller gemäß Anspruch 7 zweckmäßig mit einem Malteserantrieb in Antriebsverbindung, welcher einen Antriebsmotor, ein Getriebe, eine Malteserscheibe mit einem Antriebszapfen umfaßt und welcher unterhalb des Magazintellers auf dem Trägerchassis angeordnet ist. Dabei liegt der Antriebszapfen im Betriebszustand des Magazintellers jeweils an einer von mehreren Maltesermitnehmerflanken, die an der Unterseite des Magazintellers angeordnet sind. Entsprechend der Anordnung der Maltesermitnehmerflanken kann jede der über dem Magazinteller angeordneten Magazinröhren exakt schrittweise in ihre Entnahmestellung geschaltet werden. Der Malteserantrieb kann beim Herausziehen der Magazintellerschublade von dem Magazinteller getrennt werden, indem die Maltesermitnehmerflanke von dem Antriebszapfen des Malteserantriebs entfernt wird. Dies ist unkompliziert möglich, weil die Mitnehmerflanken jeweils eine definierte Stellung entsprechend der Entnahmestellung des Magazintellers annehmen.

Der Magazinteller weist zu seiner Steuerung zweckmäßig eine abtastbare Nullstellungsreferenzmarke auf, die als Nocke mechanisch mit einem Steuerungskontakt oder aber bei entsprechender Ausbildung optisch oder magnetisch abgetastet werden kann. Dieser Abtaster der Nullstellungsreferenzmarke sowie ein Zweirichtungszähler, der von dem Malteserantrieb durchgeführte Schritte in jeder Drehrichtung, ausgehend von einer Nullstellung des Magazintellers, zählt, gehören zu einer elektronischen Positionserkennungseinrichtung des Magazintellers gemäß Anspruch 9. Letztere ist dabei Bestandteil einer Logik-Schaltungsanordnung, welche eine Einstellbewegung einer willkürlich ausgewählten Magazinröhre auf dem kürzesten Weg in einer der beiden möglichen Drehrichtungen in die Entnahmestellung steuert. Damit kann die Einstellzeit minimiert werden, wozu außer einem Nullstellungssignal bzw. -impuls von der Nullstellungsreferenzmarke zusätzlich nur Zählimpulse entsprechend den von dem Malteserantrieb durchgeführten Schritten benötigt werden.

Zur zusätzlichen Kontrolle oder alternativ zu der voranstehenden Steuerung weist, gemäß Anspruch 10, der Magazinteller unter jeder Magazinröhre ein zur Abtastung eines Bodens einer Portionskapsel durchlässiges Sichtfenster auf, wobei mindestens ein Sensor/Abtaster unter dem Magazinteller an einer Bewegungsbahn der zusammen mit dem Magazinteller drehbaren Sichtfenster angeordnet ist und auf das Sichtfenster gerichtet ist. Durch das Sichtfenster kann der Boden bzw. ein auf dem Boden aufgebrachter Code abgetastet und in einen entsprechenden Impuls umgesetzt werden.

Insbesondere kann ein Sensor gemäß Anspruch 11 in der Entnahmeposition angeordnet sein, mit dem das Vorhandensein einer Portionskapsel in der in die Entnahmeposition eingestellten Magazinröhre überprüfbar ist. Mit dieser Überprüfung kann vermieden werden, daß eine Magazinröhre, der Portionskapsein, insbesondere einer bestimmten Kaffeeart, zugeordnet sind, zwar richtig eingestellt wird, aber trotzdem keine Portionskapsel in die Brüheinheit abgeben kann, weil sie leer ist.

Statt dessen kann aber auch schon bei dem Einlauf der Magazinröhre in die Entnahmestellung nicht nur überprüft werden, ob sich mindestens eine Portionskapsel in der betreffenden Entnahmeröhre befindet, sondern darüber hinaus eine Portionskapsel mit der gewünschten Kaffeesorte, indem gemäß Anspruch 12 ein Scanner jeweils in Drehrichtung des Magazintellers vor der Entnahmeposition angeordnet ist, mit dem ein Kaffeesorten-Code auf dem Boden der untersten Portionskapsel in einer ausgewählten der Magazinröhren ablesbar ist. In diesem Fall kann also schon während eines Suchlaufs festgestellt werden, ob als nächste Magazinröhre eine solche in die Entnahmeposition einläuft, welche eine Portionskapsel mit der gewünschten Kaffeeart beinhaltet. In diesem Fall kann sogar auf eine Erfassung der jeweiligen Position einer definierten Magazinröhre mit einer Logik-Schaltungsanordnung verzichtet werden, da der vor der Entnahmeposition angeordnete Scanner einen Einlauf der gewünschten Magazinröhre in einen Steuerbefehl in einer Steuerungseinrichtung für den Magazintellerantrieb umsetzen kann, um die Weiterschaltung des Magazintellers rechtzeitig abzubrechen, wenn die gewünschte bevorratete Magazinröhre in die Entnahmeposition einläuft. Im letzteren Fall genügt, wenn der Antrieb des Magazintellers nur eine Drehrichtung bzw. Schaltrichtung zuläßt, nur ein Scanner vor der Entnahmeposition. Sind hingegen zwei entgegengesetzte Drehrichtungen oder Schaltrichtungen für den Einlauf einer willkürlich ausgewählten Magazinröhre auf jeweils kürzesten Weg in die Entnahmestellung zugelassen, so sind zwei Scanner beidseitig der Entnahmestellung anzuordnen.

Das Magazin und die Kapseltransporteinrichtung wirken bevorzugt mit einer kompakten Brüheinheit gemäß Anspruch 13 zusammen, die einen elektromotorisch angetriebenen, durch Drehung vertikal einstellbaren Spindelkolben umfaßt, der innen einen Brühkammereinsatz mit einem nach unten gerichteten Kapselaufstichdorn und mit in diesem angeordneten Brühwasserkanälen aufweist. Der Spindelkolben ist gegen einen schwenkbaren Kapselauswerfer und eine Pyramidenplatte in eine Brühstellung durch Drehung absenkbar. An dem Spindelkolben greift ein Kapselauswurfhebel an, mit dem der Kapselauswerfer nach Beendigung eines Brühvorgangs durch Hochfahren des Spindelkolbens in eine Auswurfstellung hochgeschwenkt werden kann. Der Spindelkolben kann durch Drehung somit insgesamt drei Stellungen einnehmen, nämlich eine Aufnahmeposition für eine Portionskapsel, die horizontal mit dem Boden bzw. einem Außenwulst nach unten in den Raum zwischen dem Spindelkolben und der Pyramidenplatte mit Kapselauswerfer eingeschoben wird, eine Brühstellung, in der die Brühkammer durch dichtes Aufsetzen des Brühkammereinsatzes auf der Pyramidenplatte mit Kapselauswerfer geschlossen ist und eine Auswurfstellung, in welcher der Spindelkolben am weitesten hochgefahren ist und den Kapselauswerfer betätigt.

Diese Brüheinheit kann gemäß Anspruch 14 vorteilhaft mit auswechselbarer Pyramidenplatte und mit dem Kapselauswerfer auf einer Pyramidenträgerschublade eine aus der Brüheinheit herausziehbare Baugruppe bilden. Nach Herausziehen dieser Baugruppe ist die Pyramidenplatte gut zugänglich, um ausgewechselt werden zu können.

Der Auswurf der verbrauchten Portionskapsel erfolgt selbsttätig durch Hochfahren des parallel geführten Spindelkolbens, indem der gleitbeweglich geführte Kapselauswurfhebel den Kapselauswerfer einseitig mitnimmt, wodurch die Portionskapsel aus dem freien Raum zwischen dem Kapselauswerfer und dem hochgestellten Brühkammereinsatz aus der somit offenen Brühkammer zuverlässig, ohne direkte manuelle Manipulation der Portionskapsel, ausgeworfen wird.

Zur sicheren Zentrierung der Portionskapsel vor dem Brühvorgang weist der oberhalb der Pyramidenplatte angeordnete Kapselauswerfer auf seiner Oberseite eine Kapselzentrierung auf, die insbesondere mit dem Außenwulst der Portionskapsel zusammenwirken kann.

Ähnlich wird die Portionskapsel an ihrem Außenwulst auf der horizontalen Kapselgleitbahn zwischen dem Magazin und der Brüheinheit durch seitliche Kapselführungen geführt, die an Führungen des Kapselauswerfers anschließen, wobei die Kapselgleitbahn zweckmäßig Bestandteil der Brüheinheit ist.

Ein Ausführungsbeispiel der Erfindung wird im folgenden anhand einer Zeichnung mit fünf Figuren näher erläutert, woraus sich weitere Merkmale und Vorteile der Erfindung ergeben können. Es zeigt:
- Figur 1: einen wesentlichen Teil der Espressobrüheinrichtung mit einer Brüheinheit, einem Magazin und einer Kapseltransporteinrichtung zwischen diesen in einer Seitenansicht, teilweise geschnitten,
- Figur 2: eine Draufsicht auf den wesentlichen Teil der Espressobrüheinrichtung gemäß Figur 1, ebenfalls teilweise geschnitten,
- Figur 3a: als Einzelheit der Brüheinheit einen Spindelkolben in einer Aufnahmestellung für eine Portionskapsel,
- Figur 3b: den Spindelkolben in einer Brühstellung und
- Figur 3c: den Spindelkolben in einer Auswurfstellung der gebrauchten Portionskapsel

Das Magazin zur geordneten Bevorratung von Portionskapseln, die unterschiedliche Kaffeesorten beinhalten können, umfaßt im wesentlichen einen Magazinteller 17, der mittels eines Magazintellerdrehzapfens 19 leicht, d.h. bevorzugt ohne Werkzeug lösbar in einer Magazintellerschublade 18 drehbar gelagert ist. Auf seiner Oberseite trägt der Magazinteller 17 fünf entlang dem Umfang des Magazinteller angeordnete Magazinröhren, die mit 20 bezeichnet sind. Jede der Magazinröhren ist zur Bevorratung eines Stapels Portionskapseln 16 mit deren Bodenmembran nach unten eingerichtet, und zwar zur nach Maßgabe der Kaffeesorte sortierten Bevorratung von Magazinkapseln 16 je einer Kaffeesorte in jeweils einer der Magazinröhren 20.

Die Magazinschublade 18 ist auf parallelen Führungselementen 46 verschiebbar, d.h. aus der Espressobrüheinrichtung herausziehbar geführt. Die Führungselemente 46 stehen von einem Trägerchassis 45 nach oben ab, welches auch die Brüheinheit sowie die Kapseltransporteinrichtung zwischen dem Magazin und der Brüheinheit trägt.

Zum lösbaren, präzisen Antrieb des Magazintellers 17 dient eine Malteserantriebseinrichtung mit einem Antriebsmotor 30, der über ein Getriebe 29 eine Malteserscheibe 27 antreibt. Aus der Malteserscheibe ragt ein Antriebszapfen 28 empor, der an einer von mehreren Maltesermitnehmerflanken 58 an einer Unterseite des Magazintellers 17 zur Anlage gelangt, wenn dieser in ihre Betriebsstellung mit der Magazintellerschublade 18 eingeschoben ist. Mit dem Malteserantrieb kann der Magazinteller 17 schrittweise so weitergeschaltet werden, daß sich jeweils eine der Magazinröhren 20 exakt in einer Ausgabestellung für eine der gestapelten Portionskapseln 16 befindet, und zwar hier die am weitesten nach links bzw. am nächsten zu der Brüheinheit gedrehte Magazinröhre. Die Ausgabestellung wird auch als Entnahmestellung bezeichnet.

Zur Ausgabe der jeweils untersten Portionskapsel 16 aus der Magazinröhre 20 in Ausgabestellung weist jede der Magazinröhren 20 eine zur Außenseite hin offene Kapselmagazinöffnung 33 auf, durch die hindurch die unterste Magazinkapsel aus der Magazinröhre 20 ausgeschoben werden kann. Zum Ausschub dient ein Kapselmitnehmer 23, der in je einen radial gerichteten, außen offenen Kapselausschubschlitz 49 unter jeder Magazinröhre 20 eingreifen kann und in diesem verschiebbar geführt ist. Die zu dem Kapselmitnehmer gehörenden Kapseltransporteinrichtung wird weiter unten besprochen.

Zur Steuerung der Einstellung des Magazintellers 17 weist dieser an seinem Umfang eine Nullstellungsreferenzmarke 47 auf, die mit einem ortsfesten Abtastkontakt 48 abgetastet werden kann. Weiterhin sind unterhalb des Drehtellers Abtaster 55, 55a jeweils für jede der beiden möglichen Drehrichtungen des Magazintellers 17 vor der Ausgabestellung angeordnet. Alternativ dazu kann unterhalb der Ausgabestellung ein Sensor 56 vorgesehen sein. Jeder der Abtaster 55, 55a besteht aus einem Abtastsender und einem Encoderempfänger eines optischen Abtaststrahls, wobei der Encoderempfänger zur Entschlüsselung eines auf der Unterseite bzw. der Bodenmembran der Portionskapsein 16 aufgebrachten Kodierung eingerichtet ist. Ein Empfänger des Sensors 56 kann einfacher eingerichtet sein, da er nur das Vorhandensein oder NichtVorhandensein einer Portionskapsel festzustellen hat. Zu letzterem Zweck ist auch keine Kodierung der Portionskapseln erforderlich. Hingegen kann die Kodierung weitergehende Informationen, insbesondere über den Inhalt bzw. eine Kaffeesorte in der Portionskapsel und/oder den Hersteller, beinhalten.

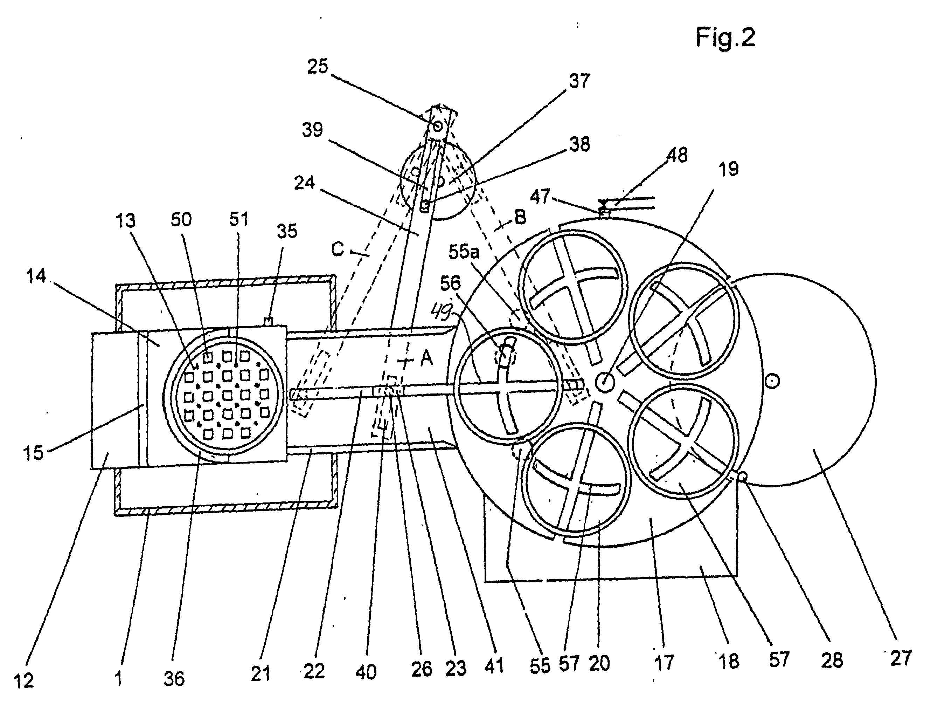

Damit die Abtaster 55, 55a, bzw. der Sensor 56, die Bodenmembran der Portionskapseln abtasten können, weist der Magazinteller 17 bogenabschnittsförmige Sichtfenster 57, wie in Figur 2 dargestellt, unterhalb der Magazinröhren 20 auf.

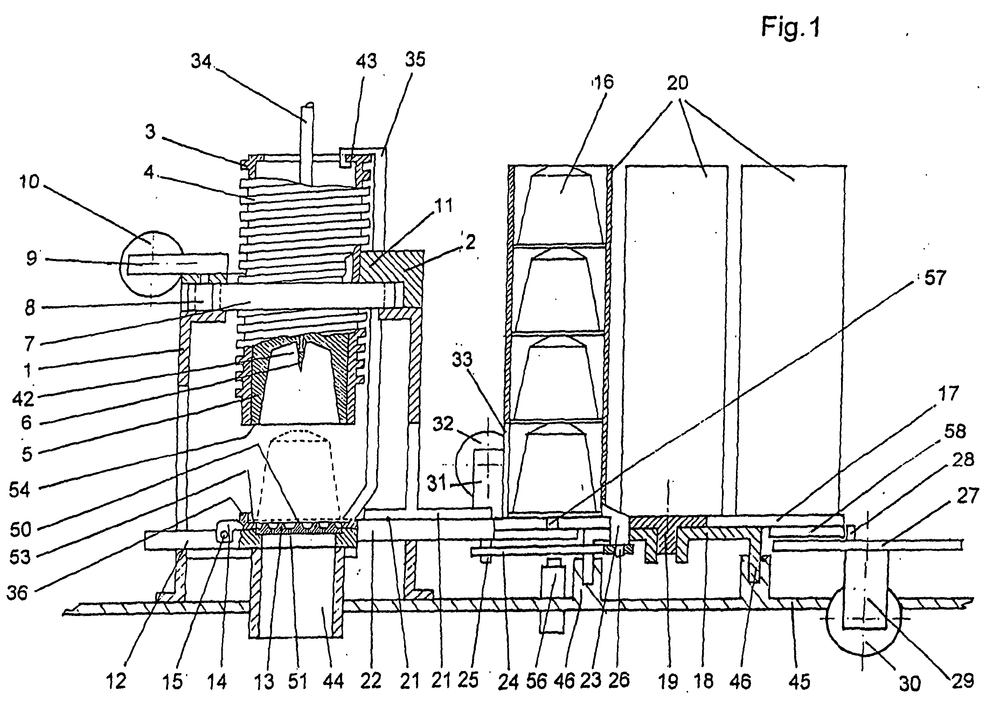

Zu der Kapseltransporteinrichtung, die den Kapselmitnehmer 23 betätigt, gehören ein Kapseltransport-Antriebsmotor 32 mit einem Getriebe 31, siehe Figur 1, an dem eine Antriebsscheibe 37 mit einem Antriebszapfen 38 angebracht ist. Der Antriebszapfen 38 greift in einen Antriebszapfenschlitz 39 eines Antriebshebels 24 ein, der unterhalb der Ebene der Magazinscheibe 17 angeordnet ist und dort an seinem den Antriebszapfenschlitz 39 entgegengesetzten Ende einen Kapselmitnehmerschlitz 40 aufweist. In den Kapselmitnehmerschlitz 40 greift ein Mitnehmerzapfen 26 des Kapselmitnehmers 23 ein. An seinem, dem Antriebszapfenschlitz benachbarten Ende ist der Antriebshebel 24 um ein Drehlager 25 schwenkbar gelagert, so daß er die in Figur 2 gezeigten bzw. mit unterbrochenen Linien angedeuteten Stellungen A, B und C einnehmen kann, wobei sind:
- A: Ruhestellung
- B: Vorbereitungsstellung zum Ausschub einer Portionskapsel einer Magazinröhre in Ausschubstellung
- C: Endstellung beim Einschub der Portionskapsel in die Brüheinheit.

Die Brüheinheit, die in ihrer Gesamtheit in dem linken Teil in Figur 1 dargestellt ist, umfaßt ein Gehäuseunterteil 1 mit einer Pyramidenträgerschublade 12, die in Figur 1 nicht weiter gezeigt ist. Auf der rahmenförmigen Pyramidenträgerschublade 12 ist eine auswechselbare Pyramidenplatte 13 seitlich unverschiebbar aufgelegt sowie ein rahmenförmiger Kapselauswerfer 14, der um ein Scharnier 15 an der Pyramidenträgerschublade 12 schwenkbar gelagert ist. Der Kapselauswerfer 14 weist eine Kapselzentrierung 36 sowie eine die Brüheinheit mit dem Magazinteller verbindenden, d.h. sich an den Rand des Magazintellers fast spaltlos anschließende, Kapselgleitbahn 41 auf, siehe auch Figur 2. Letztere weist in der Mitte eine Kapselmitnehmerführung 22 sowie beidseitig zu dieser jeweils am Rand eine Kapselführung 21 auf.

Die Brüheinheit wird ebenfalls von dem Trägerchassis 45 getragen.

Die Brüheinheit umfaßt weiterhin ein Gehäuseoberteil 2, welches einen Spindelkolben 3 mit einer dreigängigen Spindel 4, eine Spindelkolbenparallelführung 11 sowie einen Spindelkolbenantrieb trägt.

Der Spindelkolbenantrieb besteht aus einem Antriebsmotor 10, einem Getriebe 9 mit Abtriebsritzel 8, welches in eine Außenverzahnung eines Spindelkolbenantriebsrades 7 eingreift. Das Spindelkolbenantriebsrad ist innen mit einer zu der dreigängigen Spindel 4 passenden Verzahnung versehen.

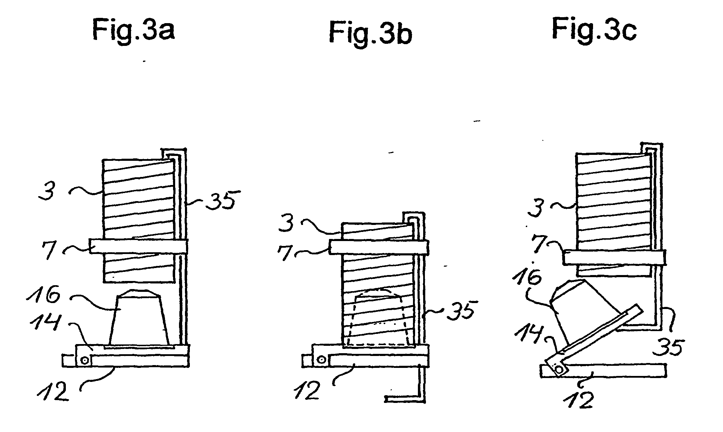

Zur Steuerung des Spindelkolbenantriebs dient eine nicht dargestellte, z.B. elektrooptische Encodersteuerung, welche die Positionierung des Spindelkolbens 3 in seine drei in den Figuren 3a, 3b, 3c dargestellten Arbeitsstellungen steuert.

In einem unteren Abschnitt des Spindelkolbens 3 ist ein Brühkammereinsatz 5 eingesetzt, der oben einen nach unten weisenden Kapselaufstichdorn 6 mit in diesem angeordneten Brühwasserzuführungskanälen 42 aufweist. Die Brühwasserzuführungskanäle 42 sind mit einer flexiblen Brühwasserzuführungsleitung 34 verbunden.

Oben ist an dem Spindelkolben 3 ein Mitnahmering 43 ausgeformt, in den ein Kapselauswurfhebel 35 eingehängt ist, der an seinem unteren Ende mit dem Kapselauswerfer 14 über nicht dargestellte Koppelungselemente gekoppelt ist.

Der Funktionsablauf der beschriebenen Espressobrüheinrichtung ist folgende:

Die Magazintellerschublade 18 wird von Hand aus dem Trägerchassis 45 gezogen und die Magazinröhren 20 werden, ebenfalls von Hand, mit den Portionskapseln 16 beladen, wozu der Magazinteller 17 mit den Magazinröhren 20 von der Magazintellerschublade 18 am besten getrennt wird. Sollen verschiedene Kaffeesorten zur Auswahl bereit gehalten werden, werden diese zur Wiedererkennung jeweils in unterschiedliche, ihnen zugeordnete Magazinröhren geladen. Nach dem Bestücken des Kapselmagazins wird dieses wieder in die Einschubelemente 46 des Trägerchassis 45 geschoben. Bei im Stand-by-Betrieb befindlicher Espressomaschine dreht daraufhin der Magazinteller 17 mit den Magazinröhren 20 automatisch um seinen Drehzapfen 19, mittels eines Malteserantriebs 27, 28, 29, 30 und die an seiner Unterseite angeordneten Maltesermitnahmeflanken 58, in die durch seinen Nullstellungsnocken 47 und den dazugehörigen ortsfesten Steuerungskontakt 48 vorgegebene Nullstellung. Bei ausgeschalteter Espressomaschine erfolgt dieser Vorgang nach dem Einschalten der Maschine. Je nach Anzahl der Magazinröhren sind diese durchnumeriert. In einem Bedienungskontrollpaneel kann die Bestückung einer jeden Magazinröhre mit den verschiedenen Kaffeesorten anhand dieser Numerierung programmiert und abgerufen werden. Das Auffinden der abgerufenen Magazinröhre erfolgt in der Weise, daß die Zahl der Schritte des Magazintellers - ausgehend von der Nullstellung - mittels einer elektronischen Encodereinheit und einer Speichereinheit, d.h. einem Zähler, gezählt und gespeichert wird. Die Schaltung ist so ausgelegt, daß der Magazinteller immer den kürzesten Weg in die angewählte Stellung läuft. Deswegen erfolgt diese Zählung der Schritte sowohl additiv als auch subtraktiv, und die Speichereinheit kennt die jeweilige Position des Magazintellers. Das Encodersignal kann dabei entweder von dem Malteserantrieb oder von der rotierenden Magazineinheit, d.h. dem Magazinteller 17 mit den Magazinröhren, gesendet werden. Nach Abschalten der Maschine oder nach einem Stromausfall wird die Speichereinheit als Positionsspeicher gelöscht. Nach Neustart der Maschine läuft der Magazinteller 17 wie oben beschrieben automatisch in seine Nullstellung. Die Malteserscheibe 27 macht für den Antrieb des Magazintellers 17 für jeden Schritt des Magazintellers eine volle Umdrehung. Während des Kapsellaufes prüft der unter der oder am Umfang der Kapselmagazineinheit positionierte Sensor 56, sobald sich die angewählte Magazinröhre in der Ausschubposition befindet, ob in der angewählten Röhre eine Portionskapsel 16 bevorratet ist. Hierzu sind Kodierungen der Portionskapseln 16 nicht erforderlich. Sofern die Portionskapsein mit einer Inhaltskodierung oder zusätzlich mit einem Herstellercode versehen sind, kann während des Suchlaufs ein unter dem Magazinteller 17 in Drehrichtung vor der Entnahmeposition angeordneter Abtaster 55 bzw. 55a durch ein Sichtfenster 57 in dem Magazinteller 17 die auf der Bodenmembran der Portionskapseln 16 befindlichen Kodierungen einlesen. Für diesen Fall kann die Prüfung: "Kapsel vorhanden?" und damit auch der Sensor 56 entfallen.

Nachdem der Magazinteller 17 die angewählte Stellung erreicht hat, startet der Kapseltransport, um die gewünschte Portionskapsel 16 in die Brüheinheit zu fördern. Dazu startet der Antriebsmotor 32 und schwenkt mittels seiner Antriebsscheibe 37 und des zugehörigen Antriebszapfens 38, der sich im Antriebszapfenschlitz 39 des Antriebshebels 24 befindet, den Antriebshebel 24 aus seiner Ruhestellung A in die Ausgangsstellung B. Dabei wird der in der Kapselmitnehmerführung 22 gleitend gelagerte Kapselmitnehmer 23 mittels seines Mitnehmerzapfens 26, der sich im Kapselmitnehmerschlitz 40 des Antriebshebels 24 befindet, unter der untersten Portionskapsel der angewählten Magazinröhre 20 hindurch in die Ausgangsstellung B für den anschließenden Transport geschoben. Im Verlaufe des Transports wird der Antriebshebel 24 von seinen Antriebselementen in die Stellung C gefahren und dabei, mittels des Kapselmitnehmers 23, die Kapsel über die Kapselgleitbahn 41, seitlich begrenzt durch die Kapselführungen 21, in die Brüheinheit gefördert. Nach erfolgtem Transport schwenkt der Antriebshebel 24 in seine Ausgangsposition A zurück.

In der Brüheinheit befindet sich die Portionskapsel 16 nach ihrem Transport in der Brühstellung. Dabei liegt sie, durch die zum Kapselauswerfer 14 gehörende Kapselzentrierung 36 zentriert, mit ihrem Außenwulst 53 auf dem Kapselauswerfer 14 und oberhalb der Pyramidenplatte 13. Der Kapselauswerfer besteht aus einer, mit dem Scharnier 15 mit der Pyramidenschublade 12 verbundenen, Platte mit einer kreisförmigen zentrischen Aussparung, deren Durchmesser dem Durchmesser der Portionskapsel 16 ohne Außenwulst 53 entspricht, der Kapselzentrierung 36 und dem Kopplungsglied, das den Auswerfer 14 mit dem Kapselauswurfhebel 35 lösbar verbindet. Die Pyramidenträgerschublade 12 ist als ein aus der Brüheinheit herausziehbares Einschubglied ausgebildet und bildet mit der auswechselbaren, in ihr gelagerten Pyramidenplatte 13 und dem Kapselauswerfer 14 eine Baugruppe. Zum Auswechseln der Pyramidenplatte 13 oder zum Reinigen kann die Pyramidenträgerschublade 12 aus der Brüheinheit gezogen werden. Dabei wird auch mittels des Kopplungsgliedes die Verbindung zum Kapselauswurfhebel 35 gelöst.

Vor Beginn des Brühvorgangs befindet sich der Spindelkolben 3 in seiner Ausgangsstellung gemäß Fig. 3a. Nachdem die Portionskapsel sich in der Brüheinheit befindet, wird im Ablauf des automatisch ablaufenden Vorganges: Suchlauf des Magazintellers 17, Transport der Kapsel 16 in das Gehäuseunterteil 1 der Brüheinheit und Positionieren in der Zentrierung 36 des Kapselauswerfers 14, der Spindelkolben 3 mittels des angetriebenen Spindelkolbenantriebrads 7 und dessen Innenverzahnung, die sich im Eingriff mit der dreigängigen Spindelschnecke 4 befindet, mittels der Parallelführung 11, die in die Spindelschnecke 4 eingreift, linear geführt nach unten in die Brühposition Fig. 3b gefahren. Dabei durchsticht der Kapselaufstichdorn 6 die Oberseite der Kapsel 16, so daß anschließend Brühwasser unter Pumpendruck von 10 bis 15 bar mit einer Temperatur von ca. 96°C über die flexible Brühwasserzuleitung 34 und die innerhalb des Kapselaufstichdoms 6 liegenden Brühwasserkanäle 42 in die Portionskapsel einströmen kann. Dadurch wird das sich in der Portionskapsel befindliche Kaffeemehl durchfeuchtet und unter Druck gesetzt. Erst, wenn ein Kapselinnendruck von ca. 6 bar erreicht ist, wird die den Kapselboden bildende Membran so stark gegen die Reliefpyramiden 50 der Reliefplatte 13 gedrückt, daß diese die Membran durchstoßen. Damit kann das Brühwasser das Kaffeemehl durchströmen und durch die Ablauflöcher 51 der Pyramidenplatte 13 und die Auslaßöffnung 44 der Brüheinheit ablaufen. Während des Brühvorgangs dichtet der Brühkammereinsatz mit seinem unteren Rand die Portionskapsel mit deren Außenwulst 53 gegen die Oberseite des Kapselauswerfers druck- und wasserdicht ab.

Nach erfolgtem Brühvorgang, dessen Länge, abhängig von der Kaffeesorte oder dem Getränkewunsch, wie z.B. Espresso oder Morgenkaffee, vorprogrammiert gesteuert werden kann, wird der Spindelkolben 3 mittels seiner Antriebselemente in die Position Fig. 3c gefahren. Dabei wird mittels des in den oberen inneren Spindelkolben-Mitnahmering 43 eingehängten Kapselauswurfhebels 35, der über das Koppelglied mit dem Kapselauswerfer 14 verbunden ist, der Kapselauswerfer 14 um seine Scharnierdrehachse 15 hochgeschwenkt und die Kapsel 16 aus der Brüheinheit geworfen. Anschließend fährt der Spindelkolben 3 automatisch in seine Ausgangsposition Fig. 3a zurück.

In den Zeichnungen sind nur die zum Ablauf und Verständnis der Abläufe und Funktionen notwendigen Teile und Baugruppen vereinfacht und schematisch dargestellt.

### Bezugszahlenliste:

- 1: Gehäuseunterteil
- 2: Gehäuseoberteil
- 3: Spindelkolben
- 4: dreigängige Spindel
- 5: Brühkammereinsatz
- 6: Kapselaufstichdorn
- 7: Spindelkolbenantriebsrad
- 8: Abtriebsritzel
- 9: Getriebe
- 10: Motor
- 11: Spindelkolben-Parallelführung
- 12: Pyramidenträgerschublade
- 13: Pyramidenplatte
- 14: Kapselauswerfer
- 15: Auswerferscharnier
- 16: Portionskapsel
- 17: Magazinteller
- 18: Magazintellerschublade
- 19: Magazinteller-Drehzapfen
- 20: Magazinröhren
- 21: Kapselführung
- 22: Kapselmitnehmerführung
- 23: Kapselmitnehmer
- 24: Antriebshebel
- 25: Drehlager
- 26: Mitnehmerzapfen
- 27: Malteserscheibe
- 28: Malteserscheibenstift
- 29: Getriebe
- 30: Motor
- 31: Getriebe
- 32: Kapseltransport-Antriebsmotor
- 33: Kapselmagazinöffnung
- 34: flexible Wasserzuführung
- 35: Kapselauswurfhebel
- 36: Kapselzentrierung
- 37: Antriebsscheibe
- 38: Antriebszapfen
- 39: Antriebszapfenschlitz
- 40: Kapselmitnehmerschlitz
- 41: Kapselgleitbahn
- 42: Brühwasserzuführungskanäle
- 43: Mitnahmering
- 44: Espressoauslauföffnung
- 45: Trägerchassis
- 46: Führungselemente
- 47: Nullstellungsreferenzmarke
- 48: Steuerungskontakt
- 49: Kapselausschubschlitz
- 50: Relief-Pyramiden
- 51: Ablauflöcher
- 52 53: Kapselwulst
- 54: Brühkammereinsatz-Rand
- 55, 55a: Abtaster zur Kapelsinhaltsprüfung
- 56: Sensor zur Prüfung, ob Kapsel vorhanden
- 57: Sensor/Scanner-Sichtfenster
- 58: Maltesermitnehmerflanken

## Patentansprüche

1. Espressobrüheinrichtung mit einer Brüheinheit, einem elektromotorisch drehbaren Magazin, das einen Magazinteller (17) aufweist, der mehrere längs seines Umfangs angeordnete, unten offene Magazinröhren (20) trägt, welche Portionskapsein (16) mit Kaffeemehl aufnehmen, sowie mit Mitteln zum einzelnen Abgeben der Portionskapseln in die Brüheinheit, wobei eine Steuerung vorgesehen ist, die eine Drehung des Magazintellers soweit steuert, bis sich eine mit der gewünschten Kaffeesorte bestückte Magazinröhre in Entnahmestellung befindet,
**dadurch gekennzeichnet,**
**daß** die Brüheinheit, die Kapseltransporteinrichtung und das Magazin auf einem Trägerchassis (45) angeordnet sind und daß das Magazin von einer Magazintellerschublade (18) getragen wird, die auf dem Trägerchassis (45) herausziehbar gelagert ist.

2. Espressobrüheinrichtung nach Anspruch 1,
**dadurch gekennzeichnet,**
**daß** der Magazinteller (17) mit den Magazinröhren von der herausgezogenen Magazintellerschublade (18) trennbar ist.

3. Espressobrüheinrichtung nach Anspruch 1 und/oder 2,
**dadurch gekennzeichnet,**
**daß** die Magazinröhren (20) in einem sich über den Magazinteller (17) erhebenden, unteren Mantelabschnitt je eine Kapselmagazinöffnung (33) aufweisen, die bezüglich des Magazintellers (17) radial nach außen offen ist und durch die hindurch jeweils eine unterste Portionskapsel (16), die mit dem Boden nach unten in einer Magazinröhre (20) bevorratet ist, aus der in Entnahmestellung positionierten Magazinröhre mittels eines elektromotorisch angetriebenen Kapselmitnehmers (23) herausschiebbar ist, und daß sich zwischen dem Magazinteller und der Brüheinheit eine Kapselgleitbahn (41) erstreckt, auf der jeweils die herausgeschobene Portionskapsel (16) mittels des Kapselmitnehmers (23) weiter zu der Brüheinheit verschiebbar ist.

4. Espressobrüheinrichtung nach Anspruch 3,
**dadurch gekennzeichnet,**
**daß** unter jeder Magazinröhre (20) ein radial verlaufender, sich bis zum Außenrand des Magazintellers (17) erstreckender und dort offener Kapselausschubschlitz (49) ausgeformt ist, der in Entnahmestellung einer der Magazinröhren (20) in eine Kapselmitnahmeführung (22) übergeht, die sich aus der Kapselgleitbahn (41) zu der Brüheinheit erstrekkend ausgeformt ist, und daß der Kapselmitnehmer (23) als Bestandteil einer Kapseltransporteinrichtung in der Kapselmitnehmerführung (22) und dem jeweils an diesem angrenzenden Kapselausschubschlitz verschiebbar geführt ist.

5. Espressobrüheinrichtung nach den Ansprüchen 1 bis 4,
**dadurch gekennzeichnet,**
**daß** in der Kapseltransporteinrichtung der Kapselmitnehmer (23) über einen Antriebshebel (24) und Getriebeelemente (31, 37, 38, 40) mit einem Kapseltransport-Antriebsmotor (32) in Verbindung steht.

6. Espressobrüheinrichtung nach einem oder mehreren der Ansprüche 1 bis 5,
**dadurch gekennzeichnet,**
**daß** das Magazin im wesentlichen neben der Brüheinheit angeordnet ist und daß die Kapseltransporteinrichtung die Portionskapseln (16) nur horizontal transportierend ausgebildet ist und im wesentlichen zwischen dem Magazin und der Brüheinheit angeordnet ist.

7. Espressobrüheinrichtung nach einem oder mehreren der Ansprüche 1 bis 6,
**dadurch gekennzeichnet,**
**daß** der Magazinteller (17) mit einem Malteserantrieb in Antriebsverbindung steht, welcher einen Antriebsmotor (30), ein Getriebe (29), eine Malteserscheibe (27) mit einem Antriebszapfen (28) umfaßt und welcher unterhalb des Magazintellers auf dem Trägerchassis angeordnet ist, und daß der Antriebszapfen (28) jeweils an einer von mehreren Maltesermitnehmerflanken (58) anliegt, die an der Unterseite des Magazintellers (17) angeordnet sind.

8. Espressobrüheinrichtung, nach einem oder mehreren der vorangehenden Ansprüche,
**dadurch gekennzeichnet,**
**daß** der Magazinteller (17) eine abtastbare Nullstellungsreferenzmarke (47) aufweist.

9. Espressobrüheinrichtung nach Anspruch 8,
**gekennzeichnet**
**durch** eine elektronische Positionserkennungseinrichtung des Magazintellers (17), mit einen Abtaster der Nullstellungsreferenzmarke (47) und einem Zweirichtungszähler, der von dem Malteserantrieb durchgeführte Schritte in jeder Drehrichtung ausgehend von einer Nullstellung des Magazintellers (17) zählt, wobei die Positionserkennungseinrichtung Bestandteil einer Logik-Schaltungsanordnung ist, welche eine Einstellbewegung einer willkürlich ausgewählten Magazinröhre auf dem kürzesten Weg in die Entnahmestellung steuert.

10. Espressobrüheinrichtung, nach einem oder mehreren der vorangehenden Ansprüche,
**dadurch gekennzeichnet,**
**daß** der Magazinteller (17) unter jeder Magazinröhre (20) eine zur Abtastung eines Bodens einer Portionskapsel (16) durchlässiges Sichtfenster (57) aufweist, und daß mindestens ein Sensor/Abtaster (55, 56) an einer Bewegungsbahn der zusammen mit dem Magazinteller (17) drehbaren Sichtfenster unter dem Magazinteller (17) angeordnet ist und auf die Bewegungsbahn gerichtet ist.

11. Espressobrüheinrichtung nach einem oder mehreren der vorangehenden Ansprüche,
**dadurch gekennzeichnet,**
**daß** ein Sensor (56) in der Entnahmeposition angeordnet ist, mit dem das Vorhandensein einer Portionskapsel (16) überprüfbar ist.

12. Espressobrüheinrichtung, nach einem oder mehreren der vorangehenden Ansprüche,
**dadurch gekennzeichnet,**
**daß** ein Scanner (55) jeweils in Drehrichtung des Magazintellers (17) vor der Entnahmeposition angeordnet ist, mit dem ein Kaffeesorten-Code auf einem Boden einer untersten Portionskapsel (16) in einer der Magazinröhren (20) ablesbar ist.

13. Espressobrüheinrichtung, nach einem oder mehreren der vorhergehenden Ansprüche,
**dadurch gekennzeichnet,**
**daß** die Brüheinheit einen elektromotorisch angetriebenen, durch Drehung vertikal einstellbaren Spindelkolben (3) umfaßt, der innen einen Brühkammereinsatz (5) mit einem nach unten gerichteten Kapselaufstichdorn (6) und mit in diesem angeordneten Brühwasserzuführungskanälen (42) aufweist und der gegen einen schwenkbaren Kapselauswerfer (14) und eine Pyramidenplatte (13) in eine Brühstellung (Fig. 3b) absenkbar ist, und daß an dem Spindelkolben (3) ein Kapselauswurfhebel (35) angreift, mit dem der Kapselauswerfer (14) nach Beendigung eines Brühvorgangs durch Hochfahren des Spindelkolbens (3) in eine Auswurfstellung (Fig. 3c) hochschwenkbar ist.

14. Espressobrüheinrichtung, nach einem oder mehreren der vorangehenden Ansprüche,
**dadurch gekennzeichnet,**
**daß** die Pyramidenplatte (13) auswechselbar ist und mit dem Kapselauswerfer (14) auf einer Pyramidenträgerschublade (12) eine aus der Brüheinheit herausziehbare Baugruppe bildet.

15. Espressobrüheinrichtung nach einem oder mehreren der vorangehenden Ansprüche,
**dadurch gekennzeichnet,**
**daß** der Kapselauswerfer (14) auf seiner Oberseite eine Kapselzentrierung aufweist, in welche eine der Portionskapseln zentriert horizontal einschiebbar ist.

16. Espressobrüheinrichtung nach einem oder mehreren der vorangehenden Ansprüche,
**dadurch gekennzeichnet,**
**daß** die horizontale Kapselgleitbahn (41) seitliche Kapselführungen (21) aufweist und Bestandteil der Brüheinheit ist.

## Claims

1. Espresso brewing device with a brewing unit, a magazine, which is rotatable by electric motor and has a magazine tray (17) bearing several magazine tubes (20), which are arranged along its periphery and are open at the bottom, and which receive portion capsules (16) with ground coffee, and also with means to individually feed the portion capsules into the brewing unit, wherein a control means is provided, which controls a rotation of the magazine tray until a magazine tube filled with the desired coffee type is located in the removal position, **characterised in that** the brewing unit, the capsule transport device and the magazine are arranged on a holding frame (45), and that the magazine is held by a magazine tray drawer (18), which is disposed on the holding frame (45) so that it can be pulled out.

2. Espresso brewing device according to Claim 1, **characterised in that** the magazine tray (17) with the magazine tubes is separable from the pulled-out magazine tray drawer (18).

3. Espresso brewing device according to Claim 1 and/or Claim 2, **characterised in that** in a lower casing section rising above the magazine tray (17), the magazine tubes (20) have a respective capsule magazine opening (33), which is open radially outwards relative to the magazine tray (17) and through which a respective lowest portion capsule (16), which is stored base downwards in a magazine tube (20), can be pushed out of the magazine tube positioned in the removal position by means of a electric motor-driven capsule entrainment means (23), and that extending between the magazine tray and the brewing unit a capsule is a capsule slide way (41), on which the respectively pushed-out portion capsule (16) can be displaced further to the brewing unit by means of the capsule entrainment means (23).

4. Espresso brewing device according to Claim 3, **characterised in that** under each magazine tube (20) a radially running capsule discharge slot (49), which extends as far as the outer edge of the magazine tray (17) and is open there, is moulded out, and when one of the magazine tubes (20) is in removal position said capsule discharge slot merges into a capsule entrainment path (22), which is moulded out of the capsule slide way (41) to extend to the brewing unit, and that as a component of a capsule transport device the capsule entrainment means (23) is displaceably guided in the capsule entrainment path (22) and the capsule discharge slot respectively adjoining this.

5. Espresso brewing device according to Claims 1 to 4, **characterised in that** in the capsule transport device the capsule entrainment means (23) connects to a capsule transport drive motor (32) via a drive lever (24) and gear elements (31, 37,38,40).

6. Espresso brewing device according to one or more of Claims 1 to 5, **characterised in that** the magazine is arranged essentially next to the brewing unit, and that the capsule transport device is configured to only transport the portion capsules (16) horizontally and is arranged essentially between the magazine and the brewing unit.

7. Espresso brewing device according to one or more of Claims 1 to 6, **characterised in that** the magazine tray (17) stands in drive connection with a Geneva movement, which comprises a drive motor (30), a gear (29), a Geneva wheel (27) with a drive journal (28) and which is arranged below the magazine tray on the holding frame, and that the drive journal (28) respectively abuts against one of several Geneva driver flanks (58) arranged on the underside of the magazine tray (17).

8. Espresso brewing device according to one or more of the preceding claims, **characterised in that** the magazine tray (17) has a scannable zero position reference mark (47).

9. Espresso brewing device according to Claim 8, **characterised by** an electronic position recognition device of the magazine tray (17), with a scanner of the zero position reference mark (47) and a bi-directional counter, which counts steps performed by the Geneva movement in each direction of rotation starting from a zero position of the magazine tray (17), wherein the position recognition device is a component of a logic circuit arrangement, which controls an adjustment movement of a randomly selected magazine tube on the shortest path into the removal position.

10. Espresso brewing device according to one or more of the preceding claims, **characterised in that** below each magazine tube (20) the magazine tray (17) has a transparent window (57) for scanning a base of a portion capsule (16), and that at least one sensor/scanner (55, 56) is arranged below the magazine tray (17) on a movement path of the window, which is rotatable together with the magazine tray (17), and is directed towards the movement path.

11. Espresso brewing device according to one or more of the preceding claims, **characterised in that** a sensor (56), with which the presence of a portion capsule (16) can be checked, is arranged in the removal position.

12. Espresso brewing device according to one or more of the preceding claims, **characterised in that** a scanner (55), with which a coffee type code on a base of a lowest portion capsule (16) in one of the magazine tubes (20) can be read, is respectively arranged in front of the removal position in the direction of rotation of the magazine tray (17).

13. Espresso brewing device according to one or more of the preceding claims, **characterised in that** the brewing unit comprises an electric motor-driven spindle plunger (3), which is vertically adjustable by rotation and which on the inside has a brewing chamber insert (5) with a downwardly directed capsule piercing spike (6) and with feed ducts (42) for brewing water arranged therein and which can be lowered towards a swivelling capsule ejector (14) and a pyramid tray (13) into a brewing position (Figure 3b), and that acting on the spindle plunger (3) is a capsule ejector lever (35), with which after a brewing operation has ended the capsule ejector (14) can be swivelled up into an ejection position (Figure 3c) by raising the spindle plunger (3).

14. Espresso brewing device according to one or more of the preceding claims, **characterised in that** the pyramid tray (13) is replaceable and with the capsule ejector (14) forms an assembly, which may be pulled out from the brewing unit, on a pyramid support drawer (12).

15. Espresso brewing device according to one or more of the preceding claims, **characterised in that** on its upper side the capsule ejector (14) has a capsule centring means, into which one of the portion capsules can be slid horizontally and centred.

16. Espresso brewing device according to one or more of the preceding claims, **characterised in that** the horizontal capsule slide way (41) has lateral capsule guides (21) and is a component of the brewing unit.

## Revendications

1. Appareil pour la préparation de café express comportant une unité d'ébouillantage, un magasin apte à être entraîné en rotation par un moteur électrique et comprenant un plateau tournant de magasin (17), qui porte plusieurs tubes de magasin (20) ouverts à la base, disposés le long de son pourtour, lesquels reçoivent des capsules dosantes (16) renfermant de la poudre de café, ainsi que des moyens pour faire passer individuellement les capsules dosantes dans l'unité d'ébouillantage, une commande étant alors prévue, qui conduit une rotation du plateau tournant de magasin jusqu'à ce qu'un tube de magasin garni de la variété souhaitée de café se trouve en position de prélèvement,
**caractérisé**
**en ce que** l'unité d'ébouillantage, le dispositif de transport de capsules et le magasin sont disposés sur un châssis porteur (45) et en ce que le magasin est porté par un tiroir support de plateau tournant de magasin (18), qui est monté sur le châssis porteur (45) d'une façon permettant de l'en retirer.

2. Appareil pour la préparation de café express selon la revendication 1,
**caractérisé**
**en ce que** le plateau tournant de magasin (17) muni des tubes de magasin peut être séparé du tiroir support de plateau tournant de magasin (18) retiré.

3. Appareil pour la préparation de café express selon la revendication 1 et/ou 2,
**caractérisé en ce que** les tubes de magasin (20) présentent chacun dans un tronçon inférieur de leur enveloppe, qui se dresse au-dessus du plateau tournant de magasin (17), une ouverture de magasin de capsules (33), qui est ouverte radialement vers l'extérieur par rapport au plateau tournant de magasin (17) et à travers laquelle une capsule dosante respective en position la plus basse (16), qui est maintenue en réserve dans un tube de magasin (20) avec le fond dirigé vers le bas, peut, au moyen d'un taquet entraîneur de capsule (23) mû par un moteur électrique, être extraite du tube de magasin placé en position de prélèvement, et **en ce que**, entre le plateau tournant de magasin et l'unité d'ébouillantage, s'étend une surface de glissement (41) pour les capsules, sur laquelle la capsule dosante (16) chaque fois extraite peut être déplacée plus loin, au moyen du taquet entraîneur de capsule (23), jusqu'à l'unité d'ébouillantage.

4. Appareil pour la préparation de café express selon la revendication 3,
**caractérisé**
**en ce que** sous chaque tube de magasin (20), est formée une fente d'extraction de capsule (49) qui se développe en direction radiale, s'étend jusqu'au bord extérieur du plateau tournant de magasin (17) et y est ouverte, et qui, dans la position de prélèvement de l'un des tubes de magasin (20), rejoint un guide de taquet entraîneur de capsule (22), qui est formé dans la surface de glissement (41) pour les capsules en s'étendant jusqu'à l'unité d'ébouillantage, et en ce que le taquet entraîneur de capsule (23), en tant qu'élément constitutif d'un dispositif de transport de capsules, est guidé en coulissement dans le guide de taquet entraîneur de capsule (22) et la fente respective d'extraction de capsule contiguë à ce dernier.

5. Appareil pour la préparation de café express selon les revendications 1 à 4,
**caractérisé**
**en ce que** dans le dispositif de transport de capsules, le taquet entraîneur de capsule (23) est relié à un moteur d'entraînement (32) pour le transport de capsules, par l'intermédiaire d'un levier d'entraînement (24) et d'organes de transmission (31, 37, 38, 40).

6. Appareil pour la préparation de café express selon une ou plusieurs des revendications 1 à 5,
**caractérisé**
**en ce que** le magasin est disposé, pour l'essentiel, à côté de l'unité d'ébouillantage et en ce que le dispositif de transport de capsules est conçu pour transporter les capsules dosantes (16) uniquement en direction horizontale et est disposé essentiellement entre le magasin et l'unité d'ébouillantage.

7. Appareil pour la préparation de café express selon une ou plusieurs des revendications 1 à 6,
**caractérisé en ce que** le plateau tournant de magasin (17) est placé en liaison d'entraînement avec un mécanisme d'entraînement à croix de Malte, qui comprend un moteur d'entraînement (30), une transmission (29), un disque à croix de Malte (27) muni d'un doigt d'entraînement (28), et qui est disposé sur le châssis porteur, au-dessous du plateau tournant de magasin, et **en ce que** le doigt d'entraînement (28) s'applique contre l'un de plusieurs flancs entraîneurs de croix de Malte (58), qui sont disposés sur la face inférieure du plateau tournant de magasin (17).

8. Appareil pour la préparation de café express selon une ou plusieurs des revendications précédentes,
**caractérisé**
**en ce que** le plateau tournant de magasin (17) présente un repère de référence détectable (47) de la position zéro.

9. Appareil pour la préparation de café express selon la revendication 8,
**caractérisé**
**par** un dispositif électronique d'identification de position du plateau tournant de magasin (17), comportant un détecteur du repère de référence (47) de la position zéro et un compteur bidirectionnel, qui compte dans chaque sens de rotation, en partant d'une position zéro du plateau tournant de magasin (17), des pas effectués par le mécanisme d'entraînement à croix de Malte, le dispositif d'identification de position faisant partie intégrante d'une circuiterie logique, qui conduit un mouvement de mise en place d'un tube de magasin sélectionné arbitrairement dans la position de prélèvement, sur le trajet le plus court.

10. Appareil pour la préparation de café express selon une ou plusieurs des revendications précédentes,
**caractérisé**
**en ce que** le plateau tournant de magasin (17) présente, sous chaque tube de magasin (20), une fenêtre de visée translucide (57) pour le balayage d'un fond d'une capsule dosante (16), et en ce qu'au moins un capteur/détecteur (55, 56) est disposé sous le plateau tournant de magasin (17), le long d'une trajectoire de déplacement de la fenêtre de visée déplaçable en rotation conjointement avec le plateau tournant de magasin (17) et est dirigé sur la trajectoire de déplacement.

11. Appareil pour la préparation de café express selon une ou plusieurs des revendications précédentes,
**caractérisé**
**en ce qu'**est disposé dans la position de prélèvement, un capteur (56) avec lequel la présence d'une capsule dosante (16) peut être contrôlée.

12. Appareil pour la préparation de café express selon une ou plusieurs des revendications précédentes,
**caractérisé**
**en ce qu'**en amont de la position de prélèvement, dans chaque sens de rotation du plateau tournant de magasin (17), est disposé un détecteur par balayage (55), avec lequel un code relatif à la variété de café peut être lu sur un fond d'une capsule dosante la plus basse (16) dans l'un des tubes de magasin (20).

13. Appareil pour la préparation de café express selon une ou plusieurs des revendications précédentes,
**caractérisé**
**en ce que** l'unité d'ébouillantage comprend un piston à vis (3) entraîné par un moteur électrique et ajustable en direction verticale par rotation, qui comporte intérieurement un insert (5) formant une chambre d'ébouillantage, pourvu d'une pique de transperçage de capsule (6) dirigée vers le bas et de canaux d'amenée d'eau d'ébouillantage (42) disposés dans cette dernière, et qui peut être abaissé dans une position d'ébouillantage (Fig. 3b) contre un éjecteur de capsule pivotant (14) et une plaque à pointes pyramidales (13), et en ce que sur le piston à vis (3) s'applique un levier d'éjection de capsule (35), à l'aide duquel l'éjecteur de capsule (14), au terme d'une phase d'ébouillantage, peut pivoter vers le haut dans une position d'éjection (Fig. 3c) par relèvement du piston à vis (3).

14. Appareil pour la préparation de café express selon une ou plusieurs des revendications précédentes,
**caractérisé**
**en ce que** la plaque à pointes pyramidales (13) est remplaçable et forme avec l'éjecteur de capsule (14), sur un tiroir support de pointes pyramidales (12), un module pouvant être retiré de l'unité d'ébouillantage.

15. Appareil pour la préparation de café express selon une ou plusieurs des revendications précédentes,
**caractérisé**
**en ce que** l'éjecteur de capsule (14) comporte, sur sa face supérieure, une structure de centrage de capsule, dans laquelle l'une des capsules dosantes peut s'insérer horizontalement dans une position centrée.

16. Appareil pour la préparation de café express selon une ou plusieurs des revendications précédentes,
**caractérisé**
**en ce que** la surface de glissement horizontale (41) pour les capsules comporte des guides latéraux de capsule (21) et fait partie intégrante de l'unité d'ébouillantage.
